# EUROPEAN PATENT SPECIFICATION

(11) **EP 3 888 942 B1**
(45) Date of publication and mention of the grant of the patent: **20.03.2024**
(21) Application number: 21164408.3
(22) Date of filing: 23.03.2021
(51) Int. Cl.: B60C 9/18, B32B 5/02

(54) **SHEAR BAND FOR A TIRE**
SCHERBAND FÜR EINEN REIFEN
BANDE DE CISAILLEMENT POUR UN PNEU

(30) Priority: 30.03.2020 US 202063001732 P; 08.10.2020 US 202017065848
(43) Date of publication of application: 06.10.2021
(73) Proprietor: The Goodyear Tire & Rubber Company, Akron, OH 44316 (US)
(72) Inventor: SPORTELLI, Francesco, L-3249 Bettembourg (LU)
(74) Representative: Kutsch, Bernd

(56) References cited:
- EP-A1- 3 238 957
- EP-A1- 3 568 291
- US-A1- 2019 263 178
- US-A1- 2019 358 921

## Description

### Field of the Invention

The present invention provides a shear band for use in non-pneumatic tires, pneumatic tires, and/or other technologies.

### Background of the Invention

A non-pneumatic tire often comprises a structurally supported resilient tire structure supporting a load without internal air pressure. Such a non-pneumatic tire includes a ground contacting portion and side wall portions that extend radially inward from the tread portion and anchor in bead portions adapted to remain secure to a wheel during rolling of the wheel/tire. A reinforced annular shear band may be disposed radially inward of the tread portion. This shear band includes at least one shear layer, a first membrane adhered to the radially inward extent of the shear layer and a second membrane adhered to the radially outward extent of the shear layer. Each of the membranes has a longitudinal tensile modulus sufficiently greater than the dynamic shear modulus of the shear layer so that, when under load, the ground contacting portion of the tire deforms to a flat contact region through shear strain in the shear layer while maintaining constant length of the membranes. Relative displacement of the membranes occurs substantially by shear strain in the shear layer.

Another conventional non-pneumatic tire includes an outer annular shear band and a plurality of web spokes that extend transversely across and radially inward from the shear band and are anchored in a wheel or hub. The shear band may comprise an annular shear layer, a first membrane adhered to the radially inward extent of the shear layer, and a second membrane adhered to the radially outward extent of the shear layer. Under load, this shear band deforms in the contact area with the ground surface through a mechanism that includes shear deformation of the shear band.

As described above, a shear band may provide desirable performance benefits in a tire. As described below, the shear band in accordance with the present invention further enhances performance capabilities of the tire. This improved construction for the shear band may be applied in pneumatic tires, non-pneumatic tires, and other products as well. It has a relatively low weight but nevertheless a high durability. When used in a tire, it helps to reduce the tire's rolling resistance and gives additional tire design flexibility.

WO 2018/130785 describes a shear band for a tire in accordance with the preamble of claim 1.

A further shear band having a first and a second fabric layer and a spacer layer interposed between these is known from EP 3 238 957 A1.

### Summary of the Invention

The invention relates to a shear band in accordance with claim 1, to a tire in accordance with claim 7 and to a method in accordance with claim 8.

Dependent claims refer to preferred embodiments of the invention.

A shear band for a tire in accordance with the present invention includes a first fabric layer extending circumferentially around the tire, a second fabric layer extending circumferentially around the tire, and a spacer layer radially interposed between the first fabric layer and the second fabric layer. The first fabric layer and the second fabric layer each consist of or contains only multifilament yarns. The spacer layer consists of or contains only monofilament yarns.

According to a preferred aspect of the shear band, the first fabric layer is secured to the spacer layer.

According to a preferred aspect of the shear band, the second fabric layer is secured to the spacer layer.

According to a preferred aspect the shear band, a first rubber layer is secured to a radially outer surface of the first fabric layer.

According to a preferred aspect of the shear band, a second rubber layer is secured to a radially inner surface of the second fabric layer.

A method in accordance with the present invention constructs or fabricates a shear band for a tire. The method incudes the steps of: defining a first fabric layer consisting of or containing only multifilament yarns; securing a first rubber layer to the first fabric layer; defining a second fabric layer consiting of or containing only multifilament yarns; securing a second rubber layer to the first fabric layer; defining a spacer layer consisting of or containing only multifilament yarns; securing the first fabric layer to a first part of the spacer layer; and securing the second fabric layer a second part of the spacer layer; wherein the first fabric layer forms a pattern having hexagonal vacant spaces and/or the second fabric layer forms a pattern having hexagonal vacant spaces.

According to a preferred aspect of the method, a further step includes knitting the first part of the spacer layer to the first fabric layer.

According to a preferred aspect of the method, a further step includes knitting the second part of the spacer layer to the second fabric layer.

According to a preferred aspect of the method, a further step includes weaving the first part of the spacer layer to the first fabric layer.

According to a preferred aspect of the method, a further step includes weaving the second part of the spacer layer to the second fabric layer.

### Definitions

As used herein and in the claims:
"Adhering" means binding one item to another item by glue, weld, friction, mechanical engagement, fusion, and/or other method of cohesion.
"Aramid" and "Aromatic polyamide" both mean a manufactured fiber in which the fiber-forming substance is generally recognized as a long chain of synthetic aromatic polyamide in which at least 85% of the amide linkages are attached directly to the two aromatic rings. Representative of an aramid or aromatic polyamide is a poly (p- phenyleneterephthalamide).
"Axial" and "axially" refer to lines or directions that are parallel to the axis of rotation of the tire.
"Circumferential" and "circumferentially" mean lines or directions extending along the perimeter of the surface of the annular tire parallel to the equatorial plane (EP) and perpendicular to the axial direction.
"Composite", as used herein, means constructed from two or more layers.
"Knitting" means a method by which yarn is manipulated to create a textile or fabric. Knitting may create multiple loops of yarn, called stitches, in a line or a tube. Knitted fabric may consist of a number of consecutive rows of intermeshing loops.
"Radial" and "radially" mean directions radially toward or away from the axis of rotation of the tire.
"Weaving" means a method of textile production in which two distinct sets of yarns or threads are interlaced at right angles to form a fabric or layer. The longitudinal yarns or threads may be called the warp and the lateral yarns or threads may be called weft or filling.
"Yarn" is a generic term for a continuous strand of fibers or filaments. Yarn occurs in the following forms: (1) a number of fibers twisted together; (2) a number of filaments laid together without twist; (3) a number of filaments laid together with a degree of twist; (4) a single filament with or without twist (monofilament); and (5) a narrow strip of material with or without twist.

### Brief Description of the Drawings

FIG. 1 is a schematic perspective view of part of an example shear band in accordance with the present invention.
FIG. 2 is schematic top view of the part of FIG. 1.
FIG. 3 is a schematic cross section view taken along line "3-3" in FIG. 1 of the complete shear band.
FIG. 4 is a schematic cross section view taken along line "4-4" in FIG. 1 of the complete shear band.

### Detailed Description of Example Embodiments of the Present Invention

Reference will now be made in detail to examples of the present invention, one or more examples of which are illustrated in the Figures. These examples may be used in a tire as described in US 10,071,603.

Features illustrated or described as part of one example may be used with another example to yield still a third example. It is intended that the present invention include these and other modifications and variations. It should be noted that for the purposes of discussion, only part of example tires may be depicted in one or more of the Figures.

The present invention provides an improved shear band that may be used in a variety of products including, for example, non-pneumatic tires, pneumatic tires, and/or other technologies. The shear band is constructed as a composite comprising, for instance, individual knitted layers, which may be, in turn, constructed from certain materials having specific physical properties that, when combined in a particular manner as described herein, provide overall physical properties and performance characteristics desirably exceeding that which would be obtained from a shear band constructed from only one of the individual materials. By way of example only, improvements in rolling resistance and tire design flexibility may be obtained.

In accordance with the present invention, shear band materials of conventional rubber compounds may be replaced by ultra-light, three-dimensional, weaved or knitted fabric layers, as described herein.

In other applications, computerized weft and warp machines may develop three-dimensional textiles with improved physical, thermal, and/or mechanical properties. These textiles may be used in aerospace, automobile, geotechnical, marine, medical, and/or other applicable industries. Within this family of textiles, weaved or knitted three-dimensional fabrics may define a structure of two independent top and bottom layers (also called skins) interconnected, but kept apart, by a spacer layer. This type of structure may be manufactured by weft or warp knitting, with warp knitting being most common. During a knitting cycle, the top and bottom layers may be knitted simultaneously using a double-needle machine.

In accordance with the present invention, knitted multifilament yarns may define the top and bottom layers, while monofilament yarns (or piles) may define the spacer layer. The shear band further comprises a first rubber layer secured to the top layer and a second rubber layer secured to the bottom layer. The shear band may be split at intervals by a material, such as polyurethane or similar fibers.

The overall thickness of the shear band is preferably between 7.0 mm and 10.0 mm.

The multifilament yarns of the top and bottom layers and the monofilament yards of the spacer layer are preferably formed of polyester, but other suitable material may be used as well.

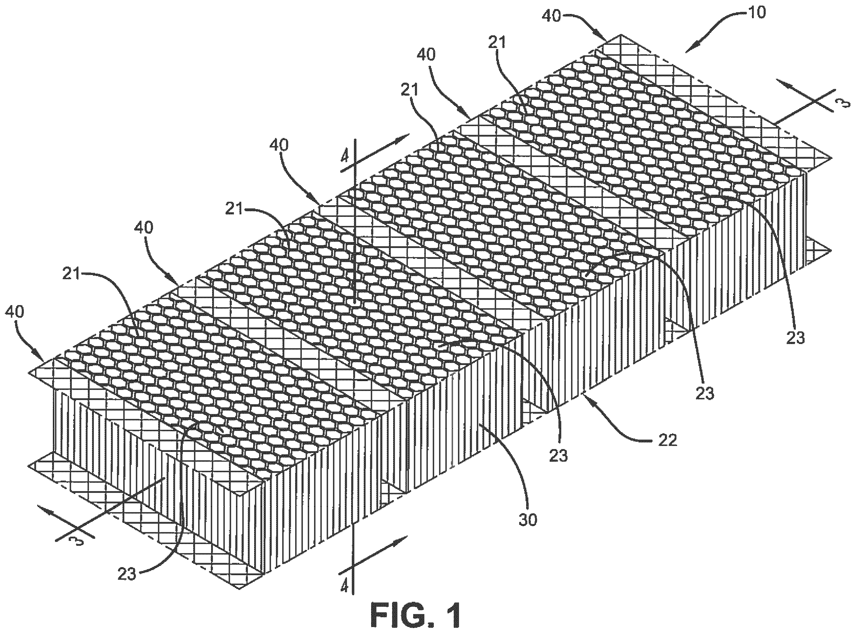

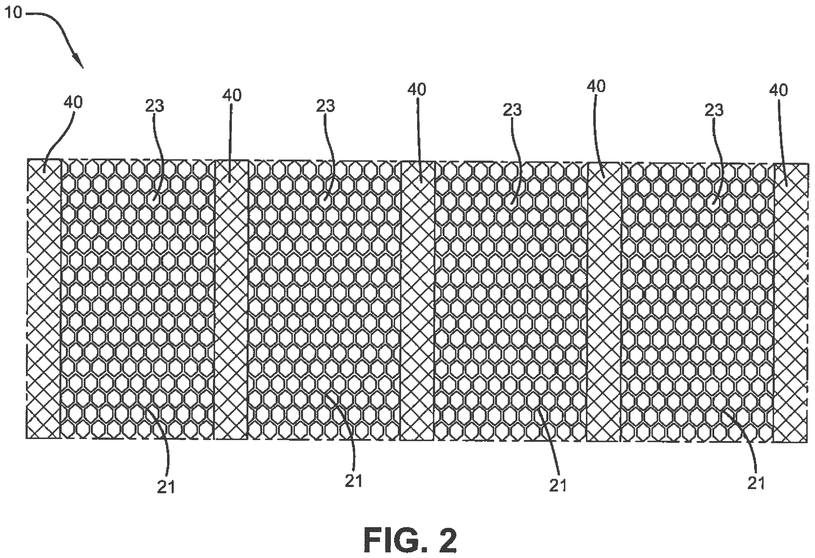

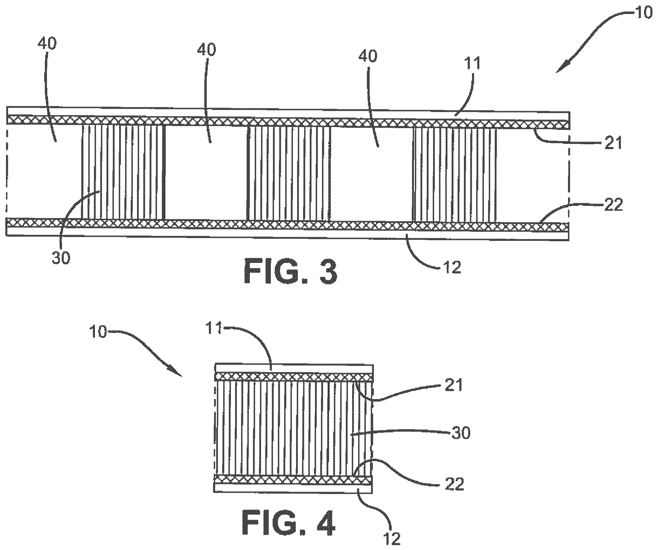

As shown in FIGS. 1-4, an example shear band 10 in accordance with the present invention includes a first top rubber layer 11 (FIGS. 3-4), a first top fabric layer 21 secured to the first top rubber layer, a second bottom rubber layer 12 (FIGS. 3-4), a second bottom fabric layer 22 secured to the second bottom rubber layer, and a spacer layer 30 radially interconnecting the first top fabric layer and the second bottom fabric layer.

The layers 11, 12, 21, 22, 30 may be split into regular parts by longitudinal spacer sections 40 of elastic polyurethane and/or other suitable material.

The first top fabric layer 21 and the second bottom fabric layer 22 are constructed of multifilament yarns of suitable material.

These multifilament yarns are preferably composed of continuous filaments aligned in parallel rows which run straight except when they are coiled by the insertion of a twist, giving the yarns an appearance of evenness or smoothness and an absence of hairiness. Most of the filaments may not require sizing. However, sizing may improve their efficiency by a further 15-20%. Sizing may also improve frictional resistance of the yarn and may bond the filaments preventing peeling back and intermingling of any broken filaments which are present on the yarn before weaving or may break during weaving. In order to achieve this, the selected size of the filaments may have sufficient adhesion to the fibers to make the filaments cohere.

The multifilament yarns form a pattern with vacant spaces 23 (FIGS. 1-2) for reducing weight. The vacant spaces 23 are hexagonal (FIGS. 1-2).

The spacer layer 30 are constructed of monofilament yarns of suitable material. The monofilament yarns preferably consist of a single solid filament. Preferably, the monofilament yarns are circular and solid in cross section. The shape of the filament may be altered however to produce noncircular filaments, hollow filaments, and/or other shaped monofilaments.

The diameter range of the used monofilament yarns is preferably in a range of from 100 µm to 2000 µm such as 0.2 mm to 0.8 mm.

Examples of suitable monofilament yarns may include fishing line, dental floss, sport racquet strings, bristles of toothbrushes, and/or other suitable uses. Hollow monofilaments may be used in softer sewing thread applications while elastomeric monofilaments may find applications in pressure layers, such as the spacer layer 30.

The monofilaments of the spacer layer 30 may be attached to the fabric layers 21, 22 in any suitable manner, such as knitting or weaving the monofilaments directly into the fabric layers.

## Claims

1. A shear band for a tire, the shear band (10) comprising a first fabric layer (21) for extending circumferentially around the tire, a second fabric layer (22) for extending circumferentially around the tire, and a spacer layer (30) interposed between the first fabric layer (21) and the second fabric layer (22), and the spacer layer (30) consisting of or containing only monofilament yarns, **characterized in that** the first fabric layer (21) consists of or contains only multifilament yarns and
the second fabric layer (22) consists of or contains only multifilament yarns, and **in that** the first fabric layer (21) forms a pattern having hexagonal vacant spaces and/or **in that** the second fabric layer (22) forms a pattern having hexagonal vacant spaces.

2. The shear band as set forth in claim 1 wherein the first fabric layer (21) is secured to the spacer layer (30) and/or wherein the second fabric layer (22) secured to the spacer layer (30).

3. The shear band as set forth in at least one of the previous claims further including a first rubber layer (11) secured to a surface of the first fabric layer (21) and/or including a second rubber layer (12) secured to a surface of the second fabric layer (22).

4. The shear band as set forth in at least one of the previous claims wherein the spacer layer (30) forms a pattern having hexagonal vacant spaces.

5. The shear band as set forth in at least one of the previous claims wherein first and/or the second fabric layer (21, 22) and further the spacer layer (30) are split into regular parts by spacer sections (40).

6. The shear band or claim 5 wherein further the first and/or the second rubber layer (11, 12) are split into regular parts by said spacer sections (40).

7. A tire comprising a shear band (10) in accordance with at least one of the previous claims, said shear band (10) extending circumferentially on the radially outer side the tire and around the tire, and wherein the spacer layer (30) is radially interposed between the first fabric layer (21) and the second fabric layer (22).

8. A method for constructing a shear band (10) for a tire, the method comprising the steps of:
defining a first fabric layer (21) consisting of or containing only multifilament yarns;
securing a first rubber layer (11) to the first fabric layer (21);
defining a second fabric layer (22) consisting of or containing only multifilament yarns;
securing a second rubber layer (12) to the second fabric layer (22);
defining a spacer layer (30) consisting of or containing only monofilament yarns;
securing the first fabric layer (21) to a first part of the spacer layer (30); and
securing the second fabric layer (22) to a second part of the spacer layer (30);
wherein the first fabric layer (21) forms a pattern having hexagonal vacant spaces and/or the second fabric layer (22) forms a pattern having hexagonal vacant spaces.

9. The method as set forth in claim 8 further including the step of knitting the first part of the spacer layer (30) to the first fabric layer (11) and/or including the step of knitting the second part of the spacer layer (30) to the second fabric layer (12).

10. The method as set forth in claim 8 further including the step of weaving the first part of the spacer layer (30) to the first fabric layer (11) and/or including the step of weaving the second part of the spacer layer (30) to the second fabric layer (12).

11. The method as set forth in claim 9 further including the step of adhering the first part of the spacer layer (30) to the first fabric layer (11) and/or including the step of adhering the second part of the spacer layer (30) to the second fabric layer (12).

## Patentansprüche

1. Scherband für einen Reifen, wobei das Scherband (10) eine erste Gewebeschicht (21), die sich in Umfangsrichtung um den Reifen herum erstreckt, eine zweite Gewebeschicht (22), die sich in Umfangsrichtung um den Reifen herum erstreckt, und eine Abstandsschicht (30) umfasst, die zwischen der ersten Gewebeschicht (21) und der zweiten Gewebeschicht (22) angeordnet ist, und wobei die Abstandsschicht (30) nur aus Monofilamentgarnen besteht oder nur diese enthält, **dadurch gekennzeichnet, dass** die erste Gewebeschicht (21) nur aus Multifilamentgarnen besteht oder nur diese enthält und die zweite Gewebeschicht (22) nur aus Multifilamentgarnen besteht oder nur diese enthält, und dass die erste Gewebeschicht (21) ein Muster mit sechseckigen Freiräumen bildet und/oder dass die zweite Gewebeschicht (22) ein Muster mit sechseckigen Freiräumen bildet.

2. Scherband nach Anspruch 1, wobei die erste Gewebeschicht (21) an der Abstandshalterschicht (30) befestigt ist und/oder wobei die zweite Gewebeschicht (22) an der Abstandshalterschicht (30) befestigt ist

3. Scherband nach mindestens einem der vorhergehenden Ansprüche, das ferner eine erste Gummischicht (11) enthält, die an einer Oberfläche der ersten Gewebeschicht (21) befestigt ist, und/oder eine zweite Gummischicht (12) enthält, die an einer Oberfläche der zweiten Gewebeschicht (22) befestigt ist.

4. Scherband nach mindestens einem der vorhergehenden Ansprüche, wobei die Abstandshalterschicht (30) ein Muster bildet, das sechseckige Leerräume hat.

5. Scherband nach mindestens einem der vorhergehenden Ansprüche, wobei die erste und/oder die zweite Gewebeschicht (21, 22) und ferner die Abstandshalterschicht (30) durch Abstandshalterabschnitte (40) in regelmäßige Teile geteilt sind.

6. Scherband nach Anspruch 5, wobei ferner die erste und/oder die zweite Gummischicht (11, 12) durch die Abstandshalterabschnitte (40) in regelmäßige Teile geteilt sind.

7. Reifen, der ein Scherband (10) gemäß mindestens einer der vorhergehenden Ansprüche umfasst, wobei das Scherband (10) sich in Umfangsrichtung auf der radial äußeren Seite des Reifens und um den Reifen herum erstreckt, und wobei die Abstandshalterschicht (30) radial zwischen der ersten Gewebeschicht (21) und der zweiten Gewebeschicht (22) angeordnet ist.

8. Verfahren zum Herstellen eines Scherbandes (10) für einen Reifen, wobei das Verfahren die folgenden Schritte umfasst:
das Festlegen einer ersten Gewebeschicht (22), die nur aus Multifilamentgarnen besteht oder nur diese enthält;
das Befestigen einer ersten Gummischicht (11) an der ersten Gewebeschicht (21);
das Festlegen einer zweiten Gewebeschicht (22), die nur aus Multifilamentgarnen besteht oder nur diese enthält;
das Befestigen einer zweiten Gummischicht (12) an der zweiten Gewebeschicht (22);
das Festlegen einer Abstandshalterschicht (30), die nur aus Monofilamentgarnen besteht oder nur diese enthält;
das Befestigen der ersten Gewebeschicht (21) an einem ersten Teil der Abstandshalterschicht (30); und
das Befestigen der zweiten Gewebeschicht (22) an einem zweiten Teil der Abstandshalterschicht (30);
wobei die erste Gewebeschicht (21) ein Muster bildet, das sechseckige Leerräume hat und/oder die zweite Gewebeschicht (22) ein Muster bildet, das sechseckige Freiräume hat.

9. Verfahren nach Anspruch 8, das ferner den Schritt des Strickens des ersten Teils der Abstandshalterschicht (30) an die erste Gewebeschicht (11) und/oder den Schritt des Strickens des zweiten Teils der Abstandshalterschicht (30) an die zweite Gewebeschicht (12) umfasst.

10. Verfahren nach Anspruch 8, das ferner den Schritt des Webens des ersten Teils der Abstandshalterschicht (30) mit der ersten Gewebeschicht (11) und/oder den Schritt des Webens des zweiten Teils der Abstandshalterschicht (30) mit der zweiten Gewebeschicht (12) umfasst.

11. Verfahren nach Anspruch 9, das ferner den Schritt des Anhaftens des ersten Teils der Abstandshalterschicht (30) auf die erste Gewebeschicht (11) und/oder den Schritt des Anhaftens des zweiten Teils der Abstandshalterschicht (30) auf die zweite Gewebeschicht (12) umfasst.

## Revendications

1. Bande de cisaillement pour un bandage pneumatique, la bande de cisaillement (10) comprenant une première couche de tissu (21) destinée à s'étendre dans la direction circonférentielle autour du bandage pneumatique, une deuxième couche de tissu (22) destinée à s'étendre dans la direction circonférentielle autour du bandage pneumatique, et une couche intercalaire (30) intercalée entre la première couche de tissu (21) et la deuxième couche de tissu (22), et la couche intercalaire (30) étant constituée ou comprenant uniquement des fils à monofilaments, **caractérisée en ce que** la première couche de tissu (21) est constituée par ou contient uniquement des fils à multifilaments et la deuxième couche de tissu (22) est constituée par ou contient uniquement des fils à multifilaments, et **en ce que** la première couche de tissu (21) forme un motif qui possède des espaces libres hexagonaux et/ou **en ce que** la deuxième couche de tissu (22) forme un motif qui possède des espaces libres hexagonaux.

2. Bande de cisaillement telle qu'indiquée dans la revendication 1, dans laquelle la première couche de tissu (21) est fixée à la couche intercalaire (30) et/ou dans laquelle la deuxième couche de tissu (22) est fixée à la couche intercalaire (30).

3. Bande de cisaillement telle qu'indiquée dans au moins une des revendications précédentes, qui englobe en outre une première couche de caoutchouc (11) fixée à une surface de la première couche de tissu (21) et/ou qui englobe une deuxième couche de caoutchouc (12) fixée à une surface de la deuxième couche de tissu (22).

4. Bande de cisaillement telle qu'indiquée dans au moins une des revendications précédentes, dans laquelle la couche intercalaire (30) forme un motif qui possède des espaces libres hexagonaux.

5. Bande de cisaillement telle qu'indiquée dans au moins une des revendications précédentes, dans laquelle la première et/ou la deuxième couche de tissu (21, 22) et en outre la couche intercalaire (30) sont divisées en parties régulières par des tronçons intercalaires (40).

6. Bande de cisaillement telle qu'indiquée dans la revendication 5, dans laquelle la première et/ou la deuxième couche de caoutchouc (11, 12) sont divisées en parties régulières par lesdits tronçons intercalaires (40).

7. Bandage pneumatique qui comprend une bande de cisaillement (10) en conformité avec au moins une des revendications précédentes, ladite bande de cisaillement (10) s'étendant dans la direction circonférentielle sur le côté externe, dans la direction radiale, du bandage pneumatique et autour du bandage pneumatique, et dans laquelle la couche intercalaire (30) est intercalée, dans la direction radiale, entre la première couche de tissu (21) et la deuxième couche de tissu (22).

8. Procédé destiné à la confection d'une bande de cisaillement (10) pour un bandage pneumatique, le procédé comprenant les étapes dans lesquelles :
on définit une première couche de tissu (21) qui est constituée par ou qui contient uniquement des fils à multifilaments ;
on fixe une première couche de caoutchouc (11) à la première couche de tissu (21) ;
on définit une deuxième couche de tissu (22) qui est constituée par ou qui contient uniquement des fils à multifilaments ;
on fixe une deuxième couche de caoutchouc (12) à la deuxième couche de tissu (22) ;
on définit une couche intercalaire (30) qui est constituée par ou qui contient uniquement des fils à monofilaments ;
on fixe la première couche de tissu (21) à une première partie de la couche intercalaire (30) ; et
on fixe la deuxième couche de tissu (22) à une deuxième partie de la couche intercalaire (30) ;
dans lequel la première couche de tissu (21) forme un motif qui possède des espaces libres hexagonaux et/ou en ce que la deuxième couche de tissu (22) forme un motif qui possède des espaces libres hexagonaux.

9. Procédé tel que représenté à la revendication 8, qui englobe en outre l'étape dans laquelle on fixe par tricotage la première partie de la couche intercalaire (30) à la première couche de tissu (11) et/ou qui englobe en outre l'étape dans laquelle on fixe par tricotage la deuxième partie de la couche intercalaire (30) à la deuxième couche de tissu (12).

10. Procédé tel que représenté à la revendication 8, qui englobe en outre l'étape dans laquelle on fixe par tissage la première partie de la couche intercalaire (30) à la première couche de tissu (11) et/ou qui englobe en outre l'étape dans laquelle on fixe par tissage la deuxième partie de la couche intercalaire (30) à la deuxième couche de tissu (12).

11. Procédé tel que représenté à la revendication 8, qui englobe en outre l'étape dans laquelle on fixe par adhérence la première partie de la couche intercalaire (30) à la première couche de tissu (11) et/ou qui englobe en outre l'étape dans laquelle on fixe par adhérence la deuxième partie de la couche intercalaire (30) à la deuxième couche de tissu (12).
